# FASCICULE DE BREVET EUROPEEN

(11) **EP 1 117 908 B1**
(45) Date de publication et mention de la délivrance du brevet: **08.05.2002**
(21) Numéro de dépôt: 99946280.7
(22) Date de dépôt: 01.10.1999
(51) Int. Cl.: F01N 3/037, F02B 37/00

(54) **DISPOSITIF D'EXTRACTION DES PARTICULES SOLIDES DES GAZ D'ECHAPPEMENT DE MOTEURS THERMIQUES**
VORRICHTUNG ZUR EXTRAKTION VON FESTEN TEILCHEN AUS VERBRENNUNGSMOTORABGASEN
DEVICE FOR EXTRACTING SOLID PARTICLES FROM HEAT ENGINE EXHAUST GASES

(30) Priorité: 02.10.1998 FR 9812373
(43) Date de publication de la demande: 25.07.2001
(73) Titulaire: D.I.C.P., 85170 Dompierre sur Yon (FR)
(72) Inventeur: ROUSSEAU, Philippe, F-49250 Beaufort en Vallée (FR)
(74) Mandataire: Laget, Jean-Loup
(86) Numéro de dépôt international: FR9902347
(87) Numéro de publication internationale: WO0020732

(56) Documents cités:
- DE-A- 3 511 043
- FR-A- 2 281 494
- US-A- 2 792 909
- US-A- 5 554 343

## Description

La présente invention concerne un dispositif d'extraction des particules solides contenus dans les gaz d'échappement d'un moteur thermique.

Elle concerne plus particulièrement un dispositif d'extraction de particules solides de gaz d'échappement disposé sur le parcours des gaz d'échappement, en aval du collecteur de gaz d'échappement du moteur, ce dispositif comprenant une chambre de centrifugation équipée d'un rotor et d'un collecteur de particules.

Les moteurs à explosion ou à combustion sont une source importante de pollution. En effet, ces moteurs restituent à l'air des produits de combustion qui contiennent, en proportion importante, des particules en suspension formant les fumées et constituées de résidus carbonés ou "imbrûlés" de fines gouttelettes de lubrifiant ainsi que des composés en proportion variable provenant de la réaction des produits d'addition incorporés dans le liquide combustible pour en améliorer les propriétés détonantes. L'ensemble de ces produits, et en particulier les particules contenues dans ces produits de la combustion, ont une influence néfaste sur l'environnement. De nombreux dispositifs ont donc été développés à ce jour pour éliminer les particules de produits carbonés contenues dans les gaz rejetés dans l'atmosphère.

Une première famille de dispositifs est constituée par des dispositifs de filtration interposés sur le parcours des gaz. Ces éléments formant filtres forment des tampons ou des chicanes sur lesquels les gaz sont appelés à déposer leurs particules. Toutefois, ces dispositifs ne donnent pas entière satisfaction car, outre la perte de charges importante qu'ils représentent sur le parcours des gaz, et par conséquent l'abaissement du rendement qui en découle, ces dispositifs sont trop rapidement colmatés en raison précisément de la richesse des gaz en particules nocives de nature solide ou liquide et qui sont une source de pollution.

Une deuxième famille de dispositifs concerne les dispositifs extrayant les particules solides des gaz par centrifugation. Cette centrifugation peut s'effectuer au moyen d'un cyclone comme cela est décrit dans le brevet FR-A-2.281.494. Toutefois, une telle solution n'apporte pas entière satisfaction en ce qui concerne le pourcentage de particules solides extraites de la veine gazeuse. Une seconde solution, plus performante au niveau du rendement d'extraction des particules, est décrite dans le brevet DE-A-3.511.043. Dans ce cas, l'installation comporte une chambre de centrifugation équipée d'un rotor entraîné en rotation par la pression du flux gazeux provenant du moteur. Des éléments stationnaires de collecte des particules sont répartis en périphérie du rotor. Ces éléments stationnaires de collecte communiquent avec une chambre de collecte disposée sous la chambre de centrifugation. Un tel dispositif présente l'avantage d'être aisé à nettoyer, d'être très efficace au niveau du pourcentage de particules solides extraites tout en demeurant de conception relativement simple.

Une troisième solution, décrite dans le brevet US-A-5.554.343, consiste à coupler un rotor d'une chambre de centrifugation à l'axe d'une turbine disposé en amont de la chambre de centrifugation, ladite turbine étant actionnée en rotation par la pression de flux gazeux émanant du collecteur de gaz. Cette solution, encore plus performante que les deux précédentes, ne permet toutefois pas de gérer les démarrages à froid ni les phases d'accélération où la vitesse du rotor de la chambre de centrifugation doit être suffisamment importante pour épurer la veine gazeuse de manière pertinente.

En conclusion, le problème de l'ensemble des dispositifs décrits ci-dessus est leur absence d'efficacité pendant les phases de démarrage du moteur et les phases d'accélération importante du moteur. Or, on sait que ces phases sont les phases les plus polluantes.

Le but de la présente invention est donc de proposer un dispositif d'extraction des particules solides des gaz d'échappement de moteurs thermiques dont la conception permet une extraction efficace des particules pendant toutes les phases de fonctionnement du moteur et, en particulier, au démarrage à froid, en pleine charge dans les côtes quand le moteur force ou en ville au ralenti avec un moteur accumulant les gaz.

Un autre but de la présente invention est de proposer un dispositif d'extraction des particules solides des gaz d'échappement de moteurs thermiques dont la conception permet d'obtenir des rendements d'extraction de particules particulièrement élevés.

A cet effet, l'invention a pour objet un dispositif d'extraction des particules solides des gaz d'échappement de moteurs thermiques, ce dispositif, disposé sur le parcours des gaz d'échappement en aval du collecteur de gaz d'échappement du moteur comprenant au moins une chambre de centrifugation équipée d'un rotor et d'un collecteur de particules, le rotor de la chambre de centrifugation étant couplé à l'axe d'une turbine disposée en amont de la chambre de centrifugation, cette turbine étant actionnée en rotation par la pression du flux gazeux émanant du collecteur de gaz du moteur thermique pour provoquer un entraînement en rotation du rotor de la chambre de centrifugation et la fonction de séparation des particules du flux gazeux dans ladite chambre de centrifugation, caractérisé en ce que le dispositif comporte, entre la turbine et la chambre de centrifugation, au moins une chambre à au moins deux étages formant zone tampon pour réguler le débit de flux gazeux entrant dans la chambre de centrifugation.

Grâce à la conception de ce dispositif d'extraction des particules solides, le rotor de la chambre de centrifugation est déjà mu en déplacement avant toute arrivée de gaz dans ladite chambre.

Grâce à la présence de la zone tampon à deux étages, il est possible d'une part, dans le premier étage dit de confinement, d'accumuler une quantité de gaz importante de manière à retarder leur pénétration dans la chambre de centrifugation. Ceci permet de gérer le problème du démarrage à froid d'un tel dispositif. On est ainsi certain que lorsque les gaz pénétreront dans la chambre de centrifugation, le rotor sera entraîné à une vitesse suffisante pour traiter la veine gazeuse. Le deuxième étage de la zone tampon permet quant à lui une montée en pression des gaz, gaz qui pourront être à nouveau accélérés en sortie de zone grâce à un dispositif approprié. De ce fait, la vitesse du rotor est accrue, ce qui permet un meilleur traitement de la veine gazeuse. En conséquence, grâce à la configuration de la zone tampon qui remplit le rôle de régulateur de débit et qui permet d'une part un confinement des gaz, d'autre par une montée en pression des gaz, on augmente le rendement du traitement dans la chambre de centrifugation et on gère les problèmes de démarrage à froid. Le fonctionnement du rotor qui coopère avec la zone tampon permet, pendant certaines phases de fonctionnement, d'adapter la vitesse de rotation du rotor en fonction de la vitesse du flux gazeux. On obtient ainsi un dispositif parfaitement adapté à la veine gazeuse à épurer. Enfin, grâce à la présence de cette chambre formant zone tampon, d'une part la température des gaz est abaissée, autorisant ainsi une réinjection des gaz dans le moteur, d'autre part, tout engorgement de la chambre de centrifugation est évité.

L'invention sera bien comprise à la lecture de la description suivante d'exemples de réalisation, en référence aux dessins annexés dans lesquels :
la figure 1 représente un synoptique d'un dispositif d'extraction de particules solides conforme à l'invention ;
la figure 2 représente une vue en perspective du dispositif représenté à la figure 1 et
la figure 3 représente une vue de dessus de la chambre de centrifugation du dispositif.

Le dispositif d'extraction, objet de l'invention, est plus particulièrement destiné à équiper des véhicules lourds, tels que des camions, des autobus, en particulier des véhicules diesel. Toutefois, d'autres applications telles que les moteurs de groupe électrogène, de machines ou autres sont également possibles.

Ce dispositif d'extraction de particules solides des gaz d'échappement est placé sur le parcours des gaz d'échappement en aval du collecteur de gaz d'échappement du moteur. En effet, dans une ligne d'échappement classique, il est prévu, en aval du moteur, un collecteur de gaz d'échappement du moteur puis généralement un pot de détente, un silencieux, l'ensemble formant la ligne d'échappement. Le dispositif, objet de l'invention, peut donc venir en substitution de dispositifs classiques, tels que pot de détente et silencieux, ou en complément de ces éléments.

Les gaz pollués arrivent donc en 9 à l'intérieur du dispositif et ressortent en 5 de ce dispositif et sont là directement rejetés dans l'environnement ou réinjectés en entrée du moteur.

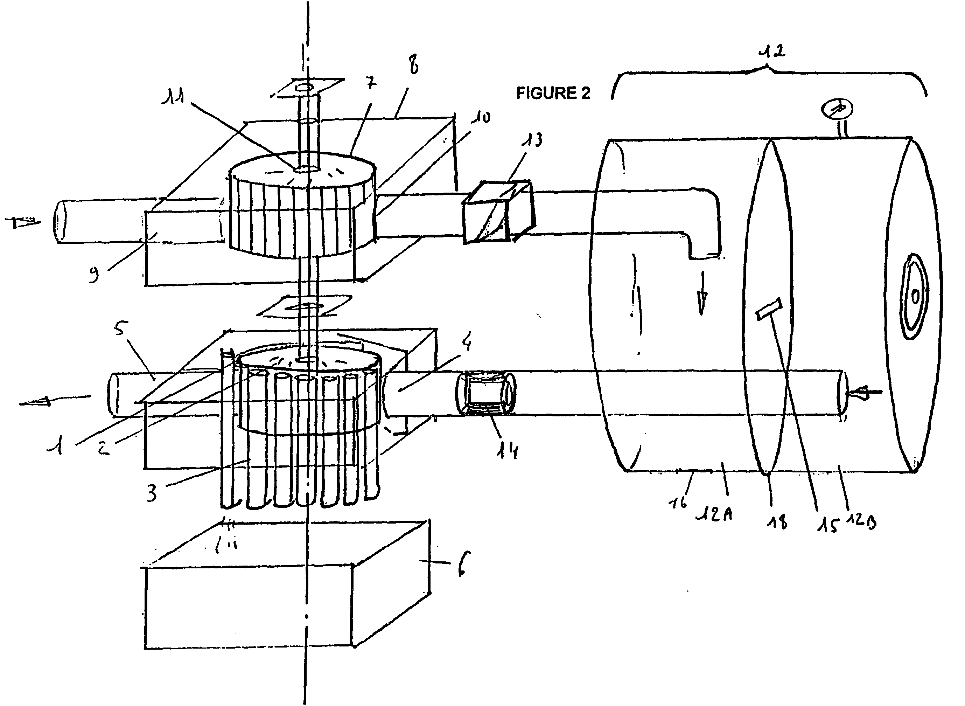

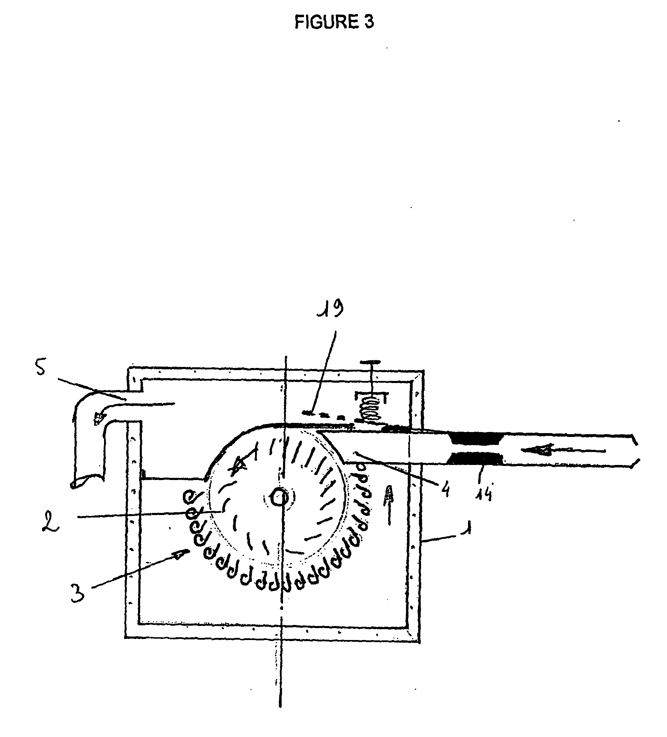

Pour permettre le traitement des particules solides des gaz et, en particulier, leur extraction de la veine gazeuse, ce dispositif comprend une chambre de centrifugation 1 équipée d'un rotor 2 et d'un collecteur de particules. Cette chambre de centrifugation peut, à titre d'exemple, être conforme à celle décrite dans le brevet allemand DE-A-3.511.043 dont le contenu relatif à ladite chambre peut être incorporé à la présente demande de brevet. En effet, cette chambre de centrifugation 1 comporte, répartis en périphérie du rotor 2, des éléments 3 stationnaires de collecte des particules. Ces éléments 3 stationnaires de collecte affectent sensiblement la forme de chambres tubulaires fendues et communiquent avec une chambre de collecte 6 des particules montée amovible sous la chambre de centrifugation 1. Cette chambre de collecte peut encore être appelée cendrier 6. L'ensemble de ces éléments est représenté aux figures 2 et 3. Le montage amovible de ce cendrier 6 sur le reste de la chambre de centrifugation facilite le nettoyage du dispositif.

Le rotor 2 de la chambre de centrifugation, de conception également classique, est quant à lui couplé par l'intermédiaire de son axe de rotation à une turbine 7 disposée, sur le parcours des gaz d'échappement, en amont de la chambre de centrifugation 1. Cet axe 11 de rotation de la turbine 7 et du rotor 2 peut être formé par un axe unique ou deux axes couplés mécaniquement pour être solidaires en déplacement.

La turbine 7 est actionnée en rotation par la pression du flux gazeux émanant du collecteur de gaz du moteur thermique. Cet entraînement en rotation de, la turbine 7 provoque un entraînement en rotation du rotor 2 de la chambre de centrifugation 1 et, la fonction de séparation des particules dans ladite chambre de centrifugation 1. La chambre de centrifugation 1 est donc opérationnelle y compris en phase de démarrage du moteur. Du fait de ce couplage, la turbine 7 est généralement disposée au-dessus de la chambre de centrifugation 1, comme le montrent les figures.

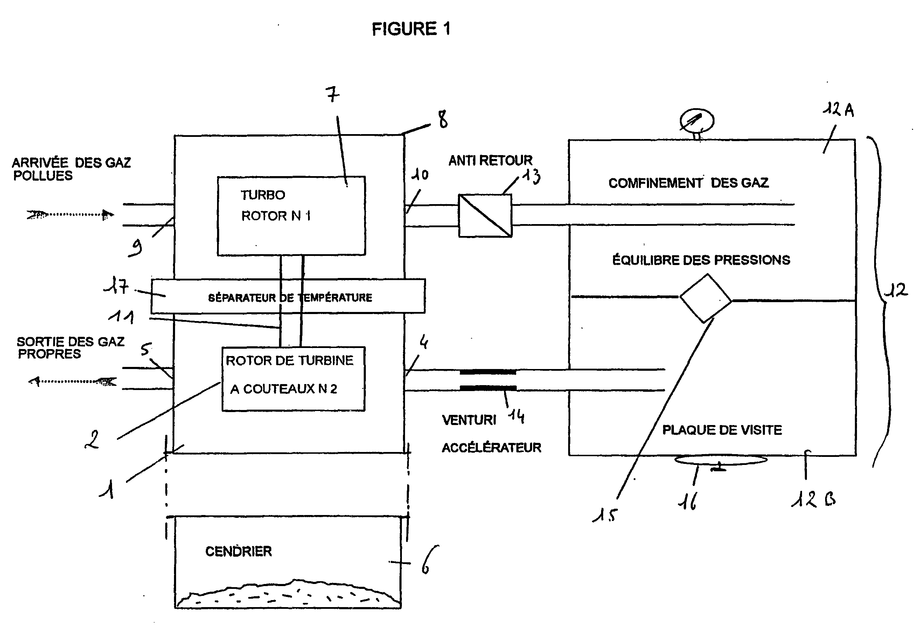

Les températures de gaz, au niveau de la turbine 7 et au niveau du rotor 2, sont différentes, ces température étant plus élevées au niveau de la turbine 7. Pour la raison mentionnée ci-dessus, la turbine 7 et la chambre de centrifugation 1 sont isolées thermiquement pour empêcher une conduction thermique entre lesdites turbines. Cette isolation thermique est représentée en 17 à la figure 1.

A titre d'exemple, la turbine 7 est constituée d'une roue montée sur l'axe 11, cette roue étant disposée à l'intérieur d'un caisson 8 comportant une entrée raccordée à la conduite des gaz d'échappement sortant du collecteur du moteur et une sortie. L'entrée et la sortie de ce caisson 8 sont représentées en 9 et 10 à la figure 1. Une fois les gaz arrivés dans le caisson 8 contenant la turbine 7, ces gaz ne sont pas directement amenés à la chambre de centrifugation 1 car la vitesse du rotor serait insuffisante pour un traitement efficace. En effet, le dispositif comporte, entre la turbine 7 et la chambre de centrifugation 1, au moins une chambre 12 à au moins deux étages formant zone tampon pour réguler le débit de flux gazeux entrant dans la chambre de centrifugation 1. Cette chambre 12 formant zone tampon peut présenter un grand nombre de forme de réalisation.

Un mode de réalisation de la chambre 12 est fourni à la figure 2. Cette chambre 12 formant zone tampon est constituée de deux chambres 12A, 12B communiquantes. La chambre 12A dite de confinement alimentée par la turbine 7 amont permet le piégeage des particules grossières par centrifugation statique. En effet, l'entrée tangentielle des gaz à l'intérieur de ladite chambre 12A permet une circulation des gaz à l'intérieur de cette chambre telle que les particules grossières tendent à se déposer sur les parois de la chambre. Ce phénomène peut être accentué par l'extrémité de la conduite débouchant dans ladite chambre 12A, cette extrémité affectant la forme d'un bec. Cette chambre 12A affecte généralement une forme cylindrique. Cette chambre 12A de confinement permet de traiter le problème de départ à froid. Le volume de cette chambre doit être calculé pour chaque moteur. Cette chambre doit être capable de contenir entre 300 et 500 litres de gaz riche lors de la mise en route du moteur sans générer de surcharge de la turbine d'extraction.

La seconde chambre 12B communiquant avec ladite première chambre est dite chambre de montée en pression des gaz et permet l'alimentation de la chambre de centrifugation 1. Pour parfaire la circulation des gaz entre lesdits éléments constituant le dispositif, il est prévu, sur la conduite reliant la turbine 7 à la chambre 12 formant zone tampon, en particulier la chambre de centrifugation statique 12A, un clapet anti-retour 13. Ce clapet anti-retour 13 permet notamment, après arrêt du moteur, la poursuite du traitement des gaz par la chambre de centrifugation 1 sans reflux de ce gaz à l'intérieur de la turbine 7. Dans ce cas, la turbine 7, qui était jusqu'à présent motrice ou maître, devient esclave par rapport au rotor 2 de la chambre de centrifugation 1.

Il est également prévu, sur la conduite reliant la chambre 12 formant zone tampon, en particulier la chambre de détente 12B de la zone tampon, à l'entrée 4 de la chambre de centrifugation 1, un dispositif pour accélérer la vitesse de la veine gazeuse en direction de la chambre de centrifugation 1. Ce dispositif est constitué, dans l'exemple représenté, par un venturi 14.

Les deux chambres 12A, 12B de la zone tampon sont quant à elles séparées par une cloison 18 radiale incorporant un régulateur de débit 15 entre lesdites chambres. Ce régulateur de débit 15 peut par exemple être constitué par une chicane. Ce régulateur 15 assure le réglage et l'équilibrage des pressions et l'auto-rotation des turbines. La chambre 12 formant zone tampon peut permettre un stockage d'environ 300 à 700 litres de gaz.

Pour parfaire le nettoyage de la chambre 12 formant zone tampon, celle-ci comporte au moins une trappe de visite 16.

Les gaz d'échappement, une fois les particules solides extraites, sont rejetés dans l'environnement ou réinjectés dans le moteur par la sortie 5. Cette sortie 5 de la chambre de centrifugation 1 peut être équipée d'un volet 19 dont l'ouverture est fonction de la pression régnant à l'intérieur de la chambre de centrifugation 1. On note que la chambre de centrifugation est conformée de telle sorte que l'entrée et la sortie des gaz s'effectuent de manière tangentielle.

On constate que les gaz d'echappement fractionnés par les différentes turbines hachent la fréquence de résonance de la veine gazeuse. Il en résulte une baisse du niveau sonore du moteur.

L'intérêt d'un tel dispositif réside par ailleurs dans sa facilité de maintenance, dans sa conception simple et dans l'absence de sources d'énergie autres que la propre énergie des gaz pour mouvoir les turbines. La maintenance d'un tel dispositif est réduite au contrôle des paliers, en l'occurrence des roulements, et au nettoyage de la chambre de collecte 6 et des deux chambres de la zone tampon, ce nettoyage pouvant s'effectuer à la fréquence des vidanges du moteur. Un tel dispositif présente par ailleurs un coût de production relativement faible comparé aux systèmes sophistiqués existants tels que pots catalytiques ou autres.

Bien évidemment, des étages supplémentaires tels qu'un étage de lavage des gaz peuvent être prévus en aval de la chambre de centrifugation 1.

La présence de la zone tampon permet de modifier le fonctionnement de l'ensemble turbine/rotor. En l'absence de cette zone tampon, le rotor serait toujours actionné à une vitesse au plus égale à la vitesse de la turbine. Tel n'est pas le cas dans la présente invention où la présence d'une zone tampon permet de réguler à souhait le débit de manière à accélérer la vitesse de rotation du rotor qui va elle-même devenir maître et agir sur la vitesse de rotation de la turbine.

## Revendications

1. Dispositif d'extraction des particules solides des gaz d'échappement de moteurs thermiques, ce dispositif, disposé sur le parcours des gaz d'échappement, en aval du collecteur de gaz d'échappement du moteur, comprenant au moins une chambre de centrifugation (1) équipée d'un rotor (2) et d'un collecteur de particules, le rotor (2) de la chambre de centrifugation (1) étant couplé à l'axe (11) d'une turbine (7) disposée en amont de la chambre de centrifugation (1), cette turbine (7) étant actionnée en rotation par la pression du flux gazeux émanant du collecteur de gaz du moteur thermique pour provoquer un entraînement en rotation du rotor (2) de la chambre de centrifugation (1) et, la fonction de séparation des particules du flux gazeux dans ladite chambre de centrifugation (1),
**caractérisé en ce qu'**il comporte, entre la turbine (7) et la chambre de centrifugation (1), au moins une chambre (12) à au moins deux étages formant zone tampon pour réguler le débit de flux gazeux entrant dans la chambre de centrifugation (1).

2. Dispositif d'extraction des particules selon la revendication 1,
**caractérisé en ce que** la chambre (12) formant zone tampon est constituée de deux chambres (12A, 12B) communiquantes, l'une (12A) dite de confinement alimentée par la turbine (7) amont pour le piégeage des particules grossières par centrifugation statique, l'autre (12B) dite montée en pression pour l'alimentation de la chambre de centrifugation.

3. Dispositif d'extraction des particules selon la revendication 2,
**caractérisé en ce que** les deux chambres (12A, 12B) de la chambre (12) formant zone tampon sont séparées par une cloison (18) radiale incorporant un régulateur de débit (15) entre lesdites chambres.

4. Dispositif d'extraction des particules selon l'une des revendications 1 à 3,
**caractérisé en ce qu'**il est prévu, sur la conduite reliant la turbine à la chambre (12) formant zone tampon, un clapet anti-retour (13).

5. Dispositif d'extraction des particules selon l'une des revendications 1 à 4,
**caractérisé en ce qu'**il est prévu, sur la conduite reliant la chambre (12) formant zone tampon à la chambre de centrifugation (1), un dispositif, tel qu'un dispositif venturi (14), pour accélérer la vitesse de la veine gazeuse en direction de la chambre de centrifugation (1).

6. Dispositif d'extraction des particules selon l'une des revendications 1 à 5,
**caractérisé en ce que** la chambre (12) formant zone tampon comporte au moins une trappe de visite (16) pour le nettoyage de ladite chambre (12).

7. Dispositif d'extraction des particules selon l'une des revendications 1 à 6,
**caractérisé en ce que** la chambre de centrifugation (1) comporte, répartis en périphérie du rotor, des éléments (3) de collecte des particules stationnaires communiquant avec une chambre de collecte (6) des particules montée amovible sous la chambre de centrifugation (1).

8. Dispositif d'extraction des particules selon l'une des revendications 1 à 7,
**caractérisé en ce que** la turbine (7) amont et la chambre de centrifugation (1) sont isolées thermiquement pour empêcher une conduction thermique entre lesdites turbines.

9. Dispositif d'extraction des particules selon l'une des revendications 1 à 8,
**caractérisé en ce que** la chambre de centrifugation (1) comporte, pour l'expulsion des gaz dans l'environnement, un volet (19) dont l'ouverture est commandée par la pression des gaz à l'intérieur de ladite chambre (1).

## Claims

1. Device for extracting solid particles from the exhaust gases of heat engines, this device, disposed on the flow path of the exhaust gases downstream of the exhaust gas collector of the engine, comprising at least one centrifugation chamber (1) equipped with a rotor (2) and with a particle collector, the rotor (2) of the centrifugation chamber (1) being connected to the spindle (11) of a turbine (7), disposed upstream of the centrifugation chamber (1), this turbine (7) being set in rotation by the pressure of the gaseous flow emanating from the gas collector of the heat engine to cause a rotational entrainment of the rotor (2) of the centrifugation chamber (1) and the operation of separating the particles from the gaseous flow in said centrifugation chamber (1), **characterised in that** it comprises, between the turbine (7) and the centrifugation chamber (1), at least one chamber (12) having at least two stages, which form a buffer zone to regulate the delivery of gaseous flow entering the centrifugation chamber (1).

2. Device for extracting particles according to claim 1, **characterised in that** the chamber (12), which forms the buffer zone, comprises two communicating chambers (12A, 12B), one (12A) being called the confinement chamber, which is supplied by the upstream turbine (7), for trapping coarse particles by static centrifugation, and the other (12B) being called the pressure-rise chamber, for supplying the centrifugation chamber.

3. Device for extracting particles according to claim 2, **characterised in that** the two chambers (12A, 12B) of the chamber (12), which forms the buffer zone, are separated by a radial partition (18) which incorporates a delivery regulator (15) between said chambers.

4. Device for extracting particles according to one of claims 1 to 3, **characterised in that** a non-return valve (13) is provided on the duct connecting the turbine to the chamber (12) which forms the buffer zone.

5. Device for extracting particles according to one of claims 1 to 4, **characterised in that** a device, such as a Venturi device (14), to accelerate the speed of the gaseous stream in the direction of the centrifugation chamber (1), is provided on the duct connecting the chamber (12), which forms the buffer zone, to the centrifugation chamber (1).

6. Device for extracting particles according to one of claims 1 to 5, **characterised in that** the chamber (12), which forms the buffer zone, comprises at least one inspection flap (16) for cleaning said chamber (12).

7. Device for extracting particles according to one of claims 1 to 6, **characterised in that** the centrifugation chamber (1) comprises elements (3), distributed over the periphery of the rotor, for collecting stationary particles, which elements communicate with a collecting chamber (6) for the particles, said chamber being detachably mounted beneath the centrifugation chamber (1).

8. Device for extracting particles according to one of claims 1 to 7, **characterised in that** the upstream turbine (7) and the centrifugation chamber (1) are thermally insulated to prevent thermal conduction between said turbines.

9. Device for extracting particles according to one of claims 1 to 8, **characterised in that** the centrifugation chamber (1) comprises a shutter (19) for expelling the gases into the environment, the opening of which shutter is controlled by the pressure of the gases inside said chamber (1).

## Patentansprüche

1. Einrichtung zum Extrahieren von festen Partikeln aus Abgas von Verbrennungsmotoren, wobei diese Einrichtung, die im Strömungsweg der Abgase in Strömungsrichtung hinter einem Abgassammler des Motors angeordnet ist, wenigstens eine Zentrifugierkammer (1), die mit einem Rotor (2) versehen ist, und einen Sammler für Partikel aufweist, wobei der Rotor (2) der Zentrifugierkammer (1) an die Welle (11) einer Turbine (7) gekoppelt ist, die in Strömungsrichtung vor der Zentrifugierkammer (1) angeordnet ist, wobei diese Turbine durch den Druck der gasförmigen Strömung, die von dem Abgassammler des Verbrennungsmotors ausgeht, drehantreibbar ist, um einen Drehantrieb des Rotors (2) der Zentrifugierkammer und die Funktion der Abscheidung von Partikeln aus der gasförmigen Strömung in der genannten Zentrifugierkammer (1) hervorzurufen,
**dadurch gekennzeichnet, daß** sie zwischen der Turbine (7) und der Zentrifugierkammer (1) wenigstens eine Kammer (12) mit wenigstens zwei Abteilen aufweist, die eine Pufferzone bildet, um die Durchflußmenge der gasförmigen Strömung zu regulieren, die in die Zentrifugierkammer (1) eintritt.

2. Einrichtung zum Extrahieren von Partikeln nach Anspruch 1,
**dadurch gekennzeichnet, daß** die Kammer (12), die eine Pufferzone bildet, durch zwei Kammern (12A, 12B) gebildet ist, die miteinander kommunizieren, wobei die eine, die auch als Sicherheitskammer bezeichnet wird, durch die in Strömungsrichtung davor gelegene Turbine (7) gespeist wird zum Fangen von größeren Partikeln durch statische Zentrifugation und wobei die andere (12B), die auch als unter Druck angeordnete Kammer bezeichnet wird, zum Speisen der Zentrifugierkammer dient.

3. Einrichtung zum Extrahieren von Partikeln nach Anspruch 2,
**dadurch gekennzeichnet, daß** die zwei Kammern (12A, 12B) der Kammer (12), die eine Pufferzone bildet, durch eine radiale Zwischenwand (18) getrennt sind, die einen Regler für die Durchflußmenge (15) zwischen den genannten Kammern aufweist.

4. Einrichtung zum Extrahieren von Partikeln nach einem der Ansprüche 1 bis 3,
**dadurch gekennzeichnet, daß** in der Leitung, die die Turbine mit der Kammer (12), die eine Pufferzone bildet, verbindet, ein Rückschlagventil (13) angeordnet ist.

5. Einrichtung zum Extrahieren von Partikeln nach einem der Ansprüche 1 bis 4,
**dadurch gekennzeichnet, daß** in der Leitung, die die Kammer (12), die eine Pufferzone bildet, mit der Zentrifugierkammer (1) verbindet, eine Einrichtung, beispielsweise eine Venturi-Einrichtung (14), angeordnet ist, um die Geschwindigkeit des gasförmigen Strahles in Richtung auf die Zentrifugierkammer (1) zu erhöhen.

6. Einrichtung zum Extrahieren von Partikeln nach einem der Ansprüche 1 bis 5,
**dadurch gekennzeichnet, daß** die Kammer (12), die eine Pufferzone bildet, wenigstens eine Schauklappe (16) zum Reinigen der genannten Kammer (12) aufweist.

7. Einrichtung zum Extrahieren von Partikeln nach einem der Ansprüche 1 bis 6,
**dadurch gekennzeichnet, daß** die Zentrifugierkammer (1) verteilt über den Umfang des Rotors stationäre Elemente (3) zum Sammeln von Partikeln aufweist, wobei die Elemente mit einer Sammelkammer (6) für Partikel kommunizieren, die lösbar mit der Zentrifugierkammer (1) verbunden ist.

8. Einrichtung zum Extrahieren von Partikeln nach einem der Ansprüche 1 bis 7,
**dadurch gekennzeichnet, daß** die in Strömungsrichtung hinten liegende Turbine (7) und die Zentrifugierkammer (1) thermisch isoliert sind, um eine Wärmeleitung zwischen den genannten Turbinen zu verhindern.

9. Einrichtung zum Extrahieren von Partikeln nach einem der Ansprüche 1 bis 8,
**dadurch gekennzeichnet, daß** die Zentrifugierkammer (1) zum Ausstoßen von Gasen in die Umgebung eine Klappe (19) aufweist, deren Öffnen durch den Druck des Gases im Inneren der genannten Kammer (1) gesteuert wird.
